# EUROPÄISCHE PATENTSCHRIFT

(11) **EP 1 512 943 B1**
(45) Veröffentlichungstag und Bekanntmachung des Hinweises auf die Patenterteilung: **10.10.2007**
(21) Anmeldenummer: 04104057.7
(22) Anmeldetag: 24.08.2004
(51) Int. Cl.: G01C 21/34, G08G 1/0968

(54) **Navigationseinrichtung und Verfahren zur Ermittlung einer Route**
Navigation device and method for determining a route
Dispositif de navigation et procédé pour déterminer une route

(30) Priorität: 04.09.2003 DE 10340818
(43) Veröffentlichungstag der Anmeldung: 09.03.2005
(73) Patentinhaber: ROBERT BOSCH GMBH, 70442 Stuttgart (DE)
(72) Erfinder: Neukirchner, Ernst-Peter, 31139, Hildesheim (DE)

(56) Entgegenhaltungen:
- EP-A- 1 004 852
- DE-A- 19 829 538

## Beschreibung

Die Erfindung betrifft ein Verfahren zur Ermittlung einer Route von einem Startpunkt zu einem Zielpunkt über Verkehrswege eines Verkehrswegenetzes, wobei Verkehrswegeabschnitten des Verkehrswegenetzes Parameter zugeordnet sind und die Ermittlung einer optimalen Route durch Bewertung der Parameter erfolgt.

Die Erfindung betrifft weiterhin eine Navigationseinrichtung, insbesondere für Kraftfahrzeuge mit einer Recheneinheit zur Ermittlung einer Route mit einem solchen Verfahren, wobei die Navigationseinrichtung an eine Empfangseinrichtung zum Empfangen angepasster Parameter für Verkehrswegeabschnitte von einer Verkehrslage-Meldezentrale ankoppelbar ist.

Navigationseinrichtungen, insbesondere zum Einbau in Kraftfahrzeugen, aber auch als tragbare Einheit sind hinreichend bekannt, die auf der Basis einer digitalen Karte eine optimale Route von einem Startpunkt zu einem Zielpunkt über Verkehrswege eines Verkehrswegenetzes ermitteln und anzeigen. In der digitalen Karte sind den einzelnen Verkehrswegeabschnitte Parameter zugeordnet, die die Art der Straße, die mittleren Geschwindigkeiten etc. beinhalten. Mit Hilfe mathematischer Optimierungsverfahren wird dann auf Basis der Parameter für die Verkehrswegeabschnitte mindestens eine optimale Route berechnet.

Es sind weiterhin Navigationseinrichtungen mit einer solchen autonomen Routenberechnung bekannt, die codierte Verkehrsmeldungen empfangen und diese bei der Berechnung von Routen berücksichtigen können.

Dabei ergeben sich in vielen Fällen Alternativrouten über Straßen, von denen eine Verkehrslage nicht bekannt ist. Dies hat zur Folge, dass ein Fahrer mit der Absicht, eine Störung zu umgehen, in eine andere Störung hinein geführt werden kann.

Andere Navigationsverfahren stellen fest, ob auf einer berechneten Route eine Störung vorliegt. Für diese Fälle werden Routen oder Routenabschnitte zur Umfahrung der Störungen vorgegeben. Dies hat den Nachteil, dass zunächst eine Route für eine ungestörte Verkehrslage berechnet werden muss, um erst in einer weiteren Berechnung eine Alternativroute zu bestimmen. Damit erhöht sich die Wartezeit bis zur Verfügbarkeit einer optimalen Route in ungünstiger Weise.

Weiterhin sind Navigationseinrichtungen bekannt, die Routenabschnitte oder vollständige Routen erhalten, die durch eine sendende Informationszentrale bereitgestellt werden. Diese zentrale Routenermittlung hat gegenüber einer autonom berechneten Route immer den Nachteil, dass nach einem Abweichen von der Vorgabe durch die Informationszentrale eine Neuanfrage an die Informationszentrale und eine Neuübertragung durch die Informationszentrale an die Navigationseinrichtung notwendig ist. Für den Fall, dass zwischen der Position des Fahrzeugs und dem Fahrtziel mehrere Störungen liegen, besteht eine optimale Route jedoch häufig nicht aus der Abfolge mehrerer einzelner Umfahrungen, sondern aus einer unter Umständen weitgehend anderen Route. Wegen der enormen Anzahl von kombinatorischen Möglichkeiten ist die Übertragung von Routen für alle mögliche Verbindungen zwischen zwei beliebigen Straßenabschnitten in einem Straßennetz allerdings nur nach individueller Anfrage, nicht jedoch in einem Broadcast-Modus möglich. Derartige zentrale Navigationssysteme mit individueller Routenanfrage sind als sogenannte Off-Bord-Navigationen bekannt.

Weiterhin bestehen Bemühungen, Verkehrsströme abhängig von ihrem jeweiligen Fahrtziel auf unterschiedliche Straßen zu lenken, um die Auslastung eines Verkehrswegenetzes zu optimieren.

Die DE-A-198 29 538 offenbart ein Verfahren zur Ermittlung einer Route in einem Verkehrswegenetz von einem Startpunkt zu einem Zielpunkt. Dabei sind Verkehrswegeabschnitten Kantengewichte zugeordnet. Weiterhin werden auch angepasste Parameter übermittelt, wenn eine Verkehrsstörung vorliegt. Diese Parameter können dazu genutzt werden, Veränderungen der Kantengewichte zu übermitteln, um bestimmte Routen vorzuprägen, in dem Sinne, dass die vorzuprägenden Routen eine Umleitung darstellen.

Aufgabe der Erfindung ist es, ein verbessertes Verfahren zur Ermittlung einer Route von einem Startpunkt zu einem Zielpunkt über Verkehrswege eines Verkehrswegenetzes zu schaffen, mit dem die vorstehend genannten Nachteile behoben werden und eine schnelle Ermittlung von individuellen Alternativrouten im Fahrzeug unter Berücksichtigung auch mehrerer Störungen dezentral, sowie eine zentrale Lenkung von Verkehrsströmen möglich ist. Das Verfahren soll eine Codierung von Verkehrsstörungen und Verkehrsleitstrategien sowie die Wahl von Alternativstrecken unterstützen.

Die Aufgabe wird erfindungsgemäß mit dem Verfahren mit den Merkmalen des unabhängigen Anspruchs 1 gelöst.

Aufgabe der Erfindung ist es weiterhin, eine verbesserte Navigationseinrichtung zu schaffen.

Die Aufgabe wird mit der gattungsgemäßen Navigationseinrichtung erfindungsgemäß gelöst durch eine zur Ermittlung einer Route nach dem oben genannten Verfahren beispielsweise durch Programmierung ausgebildeten Recheneinheit, wobei die Navigationseinrichtung an eine Empfangseinrichtung zum Empfangen angepasster Parameter für Verkehrswegeabschnitte von einer Verkehrslage-Meldezentrale ankoppelbar ist.

Es wird somit vorgeschlagen, die Parameter für Verkehrswegeabschnitte, die in einer digitalen Karte hinterlegt sind, über eine Verkehrslage-Meldezentrale im Broadcast-Verfahren anzupassen. Dabei können bestehende Parameter geändert oder in der digitalen Karte für Verkehrswegeabschnitte vorgesehene zusätzliche Variablen auf geeignete Werte gesetzt werden.

Die Ermittlung einer optimalen Route erfolgt dann auf der Basis der angepassten Parameter durch die Navigationseinrichtung in üblicher Weise.

Durch die zentrale Steuerung der Parameteranpassung der digitalen Karten einer Vielzahl von Nutzern ist eine Lenkung der Verkehrsströme möglich, ohne dass die Routenberechnung aufwändig zentral erfolgen muss.

Die angepassten Parameter können dabei auf einfache Weise beispielsweise als Zusatzdaten über einen Rundfunkkanal übertragen und von der Navigationseinrichtung empfangen werden.

Mit dem Verfahren können in einer Leitzentrale Störungen der Verkehrslage und hierzu empfohlene Alternativstrecken auf einfache Weise so codiert werden, dass eine von einer dezentralen Navigationseinrichtung beispielsweise in einem Kraftfahrzeug autonom berechnete Route alle bekannten Störungen umgeht und dabei soweit sinnvoll die empfohlenen Alternativstrecken benutzt.

Das Verfahren ist auch in engmaschigen Stadtstraßennetzen funktionsfähig. Bei der Routenberechnung wird zudem berücksichtigt, dass nicht nur einzelne Störungen jeweils unabhängig voneinander umgangen werden. Durch die angepassten Parameter wird bei Kombination mehrerer Störungen eine optimale Route in einem einzigen Berechnungsdurchlauf gefunden.

Dabei ist es vorteilhaft, wenn für jede Störung unabhängig von möglich weiteren Störungen die Parameter der gestörten Verkehrswegeabschnitte und die Parameter ausgewählter alternativer Verkehrswegeabschnitte angepasst werden. Hierzu sollten mehrere gleichwertige Variablen für Störungsparameter pro Verkehrswegeabschnitt vorgesehen werden.

Die angepassten Parameter können Kostenwerte zum Erhöhen oder Erniedrigen einer Kostenfunktion für eine ermittelte Route auf der Basis weiterer Kostenparameter der Verkehrswegeabschnitte sein. Dass heißt, dass die in der digitalen Karte abgelegten Parameter der Verkehrswegeabschnitte selbst nicht geändert werden, sondern lediglich auf der Basis sämtlicher Parameter eines Verkehrswegeabschnitts ermittelte Kostenwerte erhöht oder erniedrigt werden.

Mit den angepassten Parametern können beispielsweise die gestörten Verkehrswegeabschnitte als gesperrte Straße gekennzeichnet werden. Weiterhin können Verkehrswegeabschnitte mit den angepassten Parametern als nur bedingt befahrbare und möglichst zu umgehende Verkehrswege gekennzeichnet werden. Falls ein Verkehrswegeabschnitt auf einer Route vom Startpunkt zum Zielpunkt liegt, die einen gesperrten Verkehrsweg oder bedingt befahrbare Verkehrswege aufweist, können die betreffenden Verkehrswegeabschnitt mit den angepassten Parametern als zu meidende Verkehrswegeabschnitt gekennzeichnet werden.

Mit den angepassten Parametern können auch Verkehrswegeabschnitte als empfohlene Zufahrt zu einer Alternativstrecke oder als Alternativstrecke zu dem mindestens einen gestörten Verkehrswegeabschnitt gekennzeichnet werden.

Die Erfindung wird nachfolgend anhand der beigefügten Zeichnungen beispielhaft näher erläutert. Es zeigen:
- Figur 1 -: Skizze eines Verkehrswegenetzes mit Alternativrouten von einem Startpunkt zu einem Zielpunkt und mit durch angepasste Parameter gekennzeichnete Verkehrswegeabschnitten;
- Figur 2 -: Skizze eines Ausschnitts aus einem Verkehrswegenetz mit jeweils zwei Start- und Zielpunkten und einer Erhöhung und Erniedrigung einer Kostenfunktion;
- Figur 3 -: Skizze eines Ausschnitts aus einem Verkehrswegenetz mit zwei Störungen;
- Figur 4 -: Skizze eines Ausschnitts aus einem Verkehrswegenetz mit einem Startpunkt und zwei möglichen Zielpunkten mit einem durch einen angepassten Parameter als zu meidender Verkehrswegeabschnitt gekennzeichneten Verkehrswegeabschnitt.

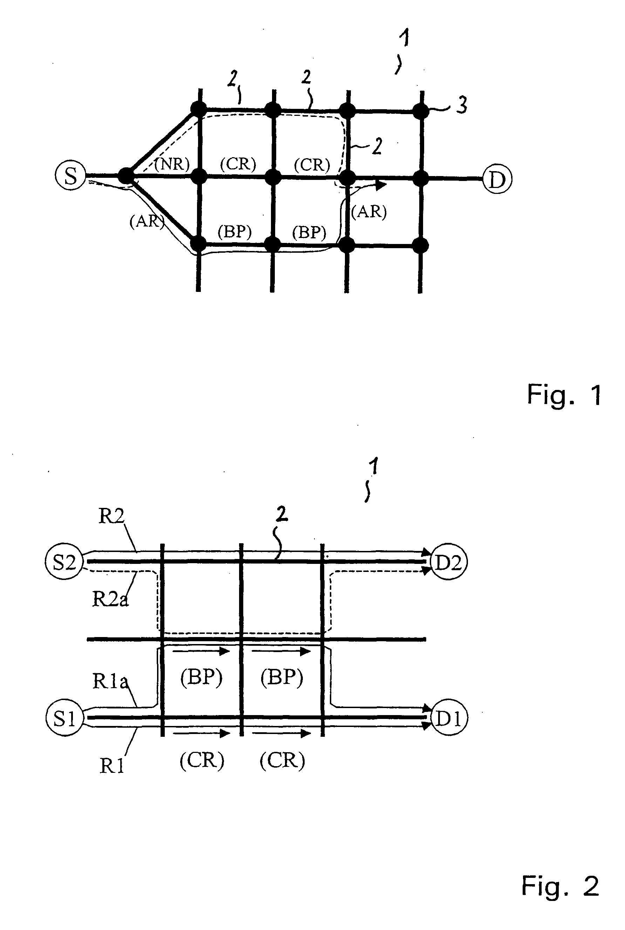

Die Figur 1 lässt einen Ausschnitt aus einem Verkehrswegenetz 1 mit einer Vielzahl von Verkehrswegeabschnitten 2 erkennen, die über Verkehrswegeknoten miteinander vernetzt sind.

Die Ermittlung einer optimalen Route von einem Startpunkt S zu einen Zielpunkt D erfolgt durch eine in einer Navigationseinrichtung in einem Kraftfahrzeug autonom ausgeführte Routenberechnung in grundsätzlich bekannter Weise durch Bewertung mehrerer alternativer Pfade nach einer Kostenfunktion, wobei die Kostenfunktion durch Parameter bestimmt wird, die den einzelnen Verkehrswegeabschnitten 2 zugeordnet sind. Im Sinne der Erfindung gelten auch die Verkehrswegeknoten 3 als Verkehrswegeabschnitte 2, da auch Verkehrswegeknoten 3 ggf. Parameter zugeordnet werden können. Der Pfad mit dem jeweilig niedrigsten Kosten wird dann als optimale Fahrtroute gewählt. In eine solche Kostenfunktion werden üblicherweise Fahrtzeit und/oder Fahrstrecke eingerechnet. Weitere Eigenschaften von Verkehrswegeabschnitten 2 können über geeignete Faktoren oder Summanden in die Kostenberechnung einfließen. So können z. B. bestimmte Strecken wie Autobahnen, Maut- oder Fährstrecken gemieden werden.

Erfindungsgemäß werden nunmehr Parameter für Verkehrswegeabschnitte 2 so angepasst, dass die Verkehrswegeabschnitte 2 ggf. bei einer Störung gekennzeichnet werden. Die entsprechenden Kennzeichnungen werden zentral durch eine Verkehrswege-Leitzentrale an die Navigationseinrichtungen übermittelt, in der dann die in einer digitalen Karte abgespeicherten Parameter für die Verkehrwegeabschnitte 2 geändert oder ergänzt werden.

In dem beschriebenen Ausführungsbeispiel des erfindungsgemäßen Verfahrens wird vorgeschlagen, bei der Berechnung der Kostenfunktion für einzelne Pfade Bonus- und Maluswerte hinzuzurechnen, die eine Bevorzugung bzw. Benachteiligung bestimmter Strecken verursachen. Hierzu werden betroffene Verkehrswegeabschnitte 2 je Fahrtrichtung pro Störung gesondert mit folgenden Parametern gekennzeichnet:
- CR:: Kennzeichnung eines absolut gesperrten und zu umgehenden Verkehrswegeabschnitts. Diese Kennzeichnung wird in der Regel auf die Verkehrswegeabschnitte angewendet, die die eigentliche Verkehrsstörung, z. B. einer Unfallstelle, Baustelle etc. enthalten (CR=Closed Road).
- LA:: Kennzeichnung für eine nur bedingt befahrbare und wenn möglich zu umgehende, jedoch z. B. für Anlieger oder den lokalen Verkehr benutzbare Straße (LA=Limited Access).
- NR:: Kennzeichnung für einen zu meidenden Verkehrswegeabschnitt, falls auf der Route Verkehrswegeabschnitte mit einer der zuvor genannten Kennzeichnungen CR oder LA liegen. Solche Abschnitte würden zur Störung hinführen und nicht zu der empfohlenen Alternativstrecke gehören. Sie können jedoch benutzt werden, wenn eine Route über sie führt, ohne die Störstelle zu erreichen oder es keine Alternative zur Benutzung eines mit "LA" gekennzeichneten Verkehrswegeabschnitts gibt (NR=Not Recommended).
- AR:: Empfohlene Zufahrt zur Alternativstrecke einer Störung, die daher vorzugsweise genutzt werden sollte, um die Alternativstrecke zu erreichen (AR=Access Road).
- BP:: Kennzeichnung einer Alternativstrecke zur Störung, die soweit sinnvoll genutzt werden soll, um die Störung zu umgehen (BP=By Pass).

Die Kennzeichnung von Verkehrswegeabschnitten 2 erfolgt dabei für jede Störungsstelle unabhängig, d. h. für jede Störung können Verkehrswegeabschnitte 2 mit jeweils einem der oben beschriebenen Attribute versehen werden. Dabei kann ein Verkehrswegeabschnitt 2 jedoch mehrere und auch verschiedene Attribute tragen, wenn diese zu verschiedenen Störungen gehören. Zur Kennzeichnung, welcher angepassten Parameter bzw. Attribute zu welcher Störung gehören, werden die angepassten Parameter um eine Identifikation z. B. in nummerischer Form erweitert.

Weiterhin können die angepassten Parameter um eine Ziel- oder Zielgebietsbeschreibung erweitert werden, wenn zu einer Störung mehrere Umleitungen zwecks Aufteilung von Verkehrsströmen benutzt werden sollen.

Durch Bonuswerte werden die Kostenfunktionen für die Streckenabschnitte mit der Kennzeichnung "AR" oder "BP" erniedrigt, wenn sich auf mindestens einem anderen Pfad mindestens eine Kennzeichnung "CR" oder "LA" befindet, die zur gleichen Störung gehören und dieser Pfad ohne Beaufschlagung durch Maluswerte eine niedrigere Kostenfunktion hätte. Durch diese Bedingung wird vermieden, dass Routen zwischen einem Startpunkt S und einem Zielpunkt D, die in der Nähe von als Alternativstrecke ausgewiesenen Verkehrswegeabschnitten verlaufen, durch die Absenkung der Kostenfunktion auf diese umgelenkt werden, obwohl die ursprüngliche Route durch die Störstelle nicht beeinträchtigt worden wäre.

Durch Maluswerte werden ebenfalls die Kosten der Verkehrswegeabschnitte mit der Kennzeichnung "NR" erhöht, wenn sich im weiteren Verlauf des Pfades Abschnitte mit der Kennzeichnung "LA" und/oder "CR" zur gleichen Störung befinden und es dazu alternative Pfade gibt.

In dem in der Figur 1 dargestellten Ausführungsbeispiel sind zwei Verkehrswegeabschnitte mit dem angepassten Parameter "CR" als nicht passierbare Verkehrswegeabschnitte gekennzeichnet, für die eine Störung gemeldet wurde. Für eine Umfahrung der nicht passierbaren Verkehrswegeabschnitte CR aufgrund der im Kraftfahrzeug zur Routenberechnung verfügbaren digitalen Karte käme potentiell der durch den gestrichelten Pfeil dargestellt Pfad in Frage. Von einer Verkehrsmelde-Leitzentrale ist jedoch eine Umfahrung über die mit den angepassten Parametern "AR" und "BP" bezeichneten Verkehrswegeabschnitte 2 wegen einer übergeordneten Verkehrsleitstrategie gewollt. Da im ungestörten Fall die Route von dem Startpunkt S zu dem Zielpunkt D über die mit "NR" und "CR" gekennzeichneten Verkehrswegeabschnitte 2 verlaufen würde, werden die Kosten für diesen Pfad erhöht und die Kosten für die mit den Parametern "AR" und "BP" gekennzeichneten Verkehrswegeabschnitte 2 gesenkt, so dass eine Umfahrung über die mit dem durchgezogenen Pfeil gekennzeichnete Strecke erfolgt. Aufgrund der durch die Parameter "AR" und "BP" eingeleiteten
Kostensenkung wird die mit dem durchgezogenen Pfad gekennzeichnete Strecke der Alternativroute, die mit dem gestrichelten Pfad bezeichnet ist, bevorzugt.

Die Figur 2 zeigt einen weiteren Ausschnitt aus einem Verkehrswegenetz 1, in dem eine Route von einem ersten Startpunkt S1 zu einem ersten Zielpunkt D1 berechnet wird, wobei die mit "CR" gekennzeichneten gestörten Verkehrswegeabschnitte 2 umgangen werden müssen. Dies erfolgt durch Erniedrigung der Kosten für die mit "BP" gekennzeichneten Abschnitte auf der Route R1 und resultiert in der Route R1A.

Für die Berechnung einer Route von einem zweiten Startpunkt S2 zu einem zweiten Zielpunkt D2 erfolgt eine Erniedrigung der Kosten für die mit BP gekennzeichneten Abschnitte nicht, da die Route R2 keine mit "CR" oder "NR" gekennzeichneten Abschnitte berührt. Eine Route R2A wird deshalb nicht als Optimalroute ermittelt.

Dies macht deutlich, dass die angepassten Parameter der Verkehrswegeabschnitte 2 nicht für sich selbst, sondern in Verbindung mit einer Störung bzw. einer gestörten Route ausgewertet werden.

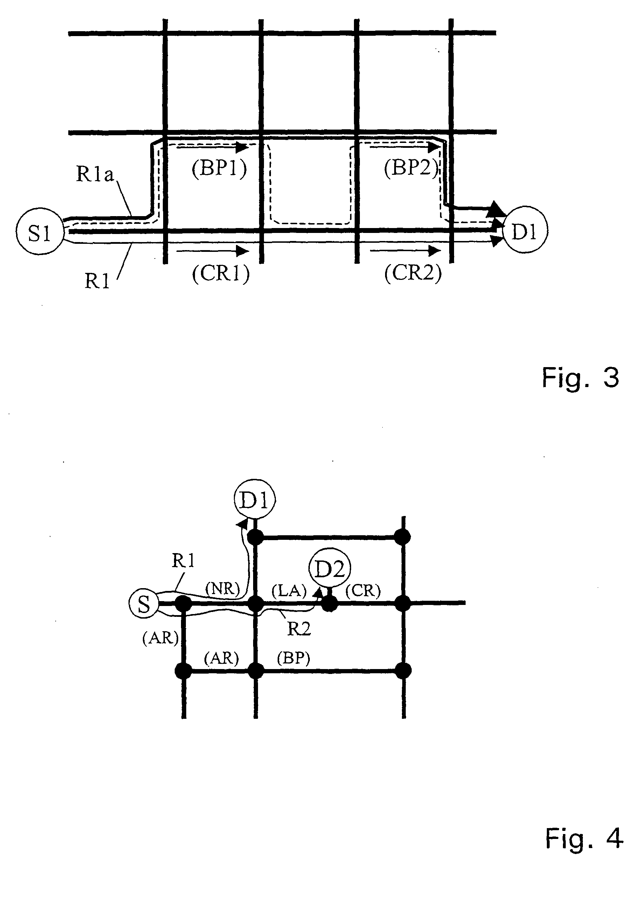

Die Figur 3 lässt einen Ausschnitt eines Verkehrswegenetzes 1 erkennen, in dem zwei Störungen vorliegen. Entsprechend sind Parameter für zwei Verkehrswegeabschnitte 2 mit "CR1" und "CR2" gekennzeichnet. Für beide Störungen gibt es jeweils eine Alternativstrecke, die durch die Abschnitte mit den Kennzeichen "BP1" und "BP2" gekennzeichnet sind. Durch die autonome Berechnung unter Berücksichtigung des erfindungsgemäßen Verfahrens ergibt sich die durch den durchgezogenen breiten Pfeil dargestellte Route R1A und nicht die durch den gestrichelten Pfeil dargestellte Umgehung der einzelnen Störungen mit dazwischen liegender Rückkehr zur ursprünglichen kürzesten Route R1, um von einem Startpunkt S1 zu einem Zielpunkt D1 zu gelangen.

Die Figur 4 lässt einen Ausschnitt eines Verkehrswegenetzes 1 mit einer Störung des mit "CR" gekennzeichneten Verkehrswegeabschnittes und einer Kennzeichnung von Verkehrswegeabschnitte mit "NR" als zu meidende Verkehrswegeabschnitte auf der Zufahrt zur Störung erkennen. Weitere Verkehrswegeabschnitte sind mit "LA" als nur bedingt befahrbar und möglichst zu umgehende Streckenabschnitte "AR" und "BP" für die Umgehung bezeichnet.

Für eine Route von dem Startpunkt S zu einem ersten Zielpunkt D1 wird der mit NR gekennzeichnete Verkehrswegeabschnitt nicht durch einen Maluswert in seiner Bewertung benachteiligt, da die zugehörige Störung des mit "CR" bezeichneten Verkehrswegeabschnittes nicht im weiteren Verlauf der Route R1 liegt.

Für eine Route von dem Startpunkt S zu dem zweiten Zielpunkt D2 liegt sowohl der Abschnitt mit der Kennzeichnung "NR" als auch der mit der Kennzeichnung "LA" auf der Route R2. Es wird jedoch keine Umleitung benutzt, da der Abschnitt mit der Kennzeichnung "NR" nicht mit einem Maluswert beaufschlagt wird, weil es keinen alternativen Weg zum Abschnitt mit der Kennzeichnung "LA" gibt.

Aus den dargestellten Beispielen wird deutlich, dass durch Maluswerte die Kosten für die Streckenabschnitte mit der Kennzeichnung "CR" oder "LA" erhöht werden, wenn es im jeweiligen Pfad Alternativpfade gibt.

## Patentansprüche

1. Verfahren zur Ermittlung einer Route von einem Startpunkt (S) zu einem Zielpunkt (D) über Verkehrswege eines Verkehrswegenetzes (1), wobei Verkehrswegeabschnitten (2) des Verkehrswegenetzes (1) Parameter zugeordnet sind und die Ermittlung einer optimalen Route durch Bewertung der Parameter erfolgt, wobei angepasste Parameter für Verkehrswegeabschnitte (2) an eine Navigationseinrichtung übermittelt werden, wenn eine Störung auf mindestens einem Verkehrswegeabschnitt (2) vorliegt, wobei die Parameter in Bezug zu mindestens einer Verkehrsstörung stehen, auch wenn sie nicht gestörten Verkehrswegeabschnitten (2) zugeordnet sind und wobei eine Route unter Berücksichtigung mindestens einer Störung in Abhängigkeit von den angepassten Parametern ermittelt wird,
wobei für jede Störung unabhängig von möglichen weiteren Störungen die Parameter der gestörten Verkehrswegeabschnitte (2) und die Parameter ausgewählter alternativer Verkehrswegeabschnitte (2) angepasst werden.

2. Verfahren nach Anspruch 1, **dadurch gekennzeichnet, dass** die angepassten Parameter Kostenwerte zum Erhöhen oder Erniedrigen einer Kostenfunktion für eine ermittelte Route auf der Basis weiterer Kostenparameter der Verkehrswegeabschnitte (2) sind.

3. Verfahren nach einem der vorhergehenden Ansprüche, **gekennzeichnet durch** Zuordnen der angepassten Parameter mit einer Störungskennung jeweils zu mindestens einer Störung.

4. Verfahren nach einem der vorhergehenden Ansprüche, **dadurch gekennzeichnet, dass** mit den angepassten Parametern die gestörten Verkehrswegeabschnitte (2) als gesperrte Straße **gekennzeichnet** werden, wodurch diese nicht in einer zu berechnenden Route enthalten sein dürfen.

5. Verfahren nach einem der vorhergehenden Ansprüche, **gekennzeichnet durch** Kennzeichnen von Verkehrswegeabschnitte (2) mit den angepassten Parametern als nur bedingt befahrbare und möglichst zu umgehende Verkehrswege, wodurch diese nur dann in einer zu berechnenden Route enthalten sein dürfen, wenn es hierzu keine Alternativstrecken gibt.

6. Verfahren nach einem der vorhergehenden Ansprüche, **gekennzeichnet durch** Kennzeichnen von Verkehrswegeabschnitte (2) mit den angepassten Parametern als zu meidende Verkehrswegeabschnitte (2), falls diese Verkehrswegeabschnitte (2) im ungestörten Fall auf einer Route vom Startpunkt zum Zielpunkt mit einem gesperrten Verkehrsweg und/oder bedingt befahrbaren Verkehrsweg liegen.

7. Verfahren nach einem der vorhergehenden Ansprüche, **gekennzeichnet durch** Kennzeichnen von Verkehrswegeabschnitten (2) mit den angepassten Parametern als empfohlene Zufahrt zu einer Alternativstrecke, wodurch diese für eine Route über eine Alternativstrecke bevorzugt wird.

8. Verfahren nach einem der vorhergehenden Ansprüche, **gekennzeichnet durch** Kennzeichnen von Verkehrswegeabschnitten (2) mit den angepassten Parametern als Alternativstrecke zu dem mindestens einem gestörten Verkehrswegeabschnitt (2), wodurch die Alternativstrecke bei der Routenberechnung bevorzugt wird, wenn die Route im ungestörten Fall über einen als gestört **gekennzeichnet**en Verkehrswegeabschnitt (2) führen würde.

9. Navigationseinrichtung, insbesondere für Kraftfahrzeuge, mit einer Recheneinheit zur Ermittlung einer Route mit dem Verfahren nach einem der vorhergehenden Ansprüche, wobei die Navigationseinrichtung an eine Empfangseinrichtung zum Empfangen angepasster Parameter für Verkehrswegeabschnitte (2) von einer Verkehrslage-Meldezentrale ankoppelbar ist.

## Claims

1. Method for determining a route from a starting point (S) to a destination (D) via traffic paths of a traffic path network (1), wherein traffic path sections (2) of the traffic path network (1) are assigned parameters and an optimum route is determined by evaluating the parameters, wherein adapted parameters for traffic path sections (2) are transferred to a navigation device if disruption is present on at least one traffic path section (2), wherein the parameters relate to at least one instance of traffic disruption even if they are assigned to non-disrupted traffic path sections (2), and wherein a route is determined by taking into account at least one instance of disruption as a function of the adapted parameters,
wherein for each instance of disruption the parameters of the disrupted traffic path sections (2) and the parameters of selected alternative traffic path sections (2) are adapted independently of possible further instances of disruption.

2. Method according to Claim 1, **characterized in that** the adapted parameters are cost values for increasing or reducing a cost function for a determined route on the basis of further cost parameters of the traffic path sections (2).

3. Method according to one of the preceding claims, **characterized by** assignment of the adapted parameters with a disruption identifier to at least one instance of disruption in each case.

4. Method according to one of the preceding claims, **characterized in that** with the adapted parameters the disrupted traffic path sections (2) are **characterized** as a blocked road, as a result of which a route to be calculated must not contain them.

5. Method according to one of the preceding claims, **characterized by** identifiers of traffic path sections (2) with the adapted parameters as able to be travelled on only to a limited degree and traffic paths which are to be as far as possible avoided, as a result of which said traffic paths can be included in a route to be calculated only if there are no alternative route sections to them.

6. Method according to one of the preceding claims, **characterized by** identifiers of traffic path sections (2) with the adapted parameters as traffic path sections (2) to be avoided if these traffic path sections (2) lie, when there is an absence of disruption, on a route from the starting point to the destination with a blocked traffic path and/or a traffic path which can be travelled on to a limited degree.

7. Method according to one of the preceding claims, **characterized by** identifiers of traffic path sections (2) with the adapted parameters as a recommended entry to an alternative route section, as a result of which the latter is preferred for a route over an alternative route section.

8. Method according to one of the preceding claims, **characterized by** identifiers of traffic path sections (2) with the adapted parameters as an alternative route section to the at least one disrupted traffic path section (2), as a result of which the alternative route section is preferred in the route calculation if the route with an absence of disruption were to lead via a traffic path section (2) which is identified as disrupted.

9. Navigation device in particular for motor vehicles, having a computer unit for determining a route with the method according to one of the preceding claims, wherein the navigation device can be coupled to a receiver device for receiving adapted parameters for traffic path sections (2) from a traffic situation reporting centre.

## Revendications

1. Procédé pour déterminer un trajet à partir d'un point de départ (S) vers un point de destination (D) par un chemin de circulation empruntant un réseau de voie de circulation (1), selon lequel
on associe des paramètres aux segments des voies de circulation (2) du réseau de voie de circulation (1) et on détermine un trajet optimum se fait par l'exploitation des paramètres,
on transmet des paramètres adaptés à des segments de voie de circulation (2) à une installation de navigation s'il y a une perturbation sur au moins un segment de voie de circulation (2),
les paramètres étant en relation avec au moins une perturbation de voie de circulation même si ces paramètres ne sont pas associés à des segments de voie de circulation perturbée (2) et on détermine un trajet en tenant compte d'au moins une perturbation en fonction des paramètres adaptés,
et pour chaque perturbation, indépendamment d'éventuelles autres perturbations possibles, on adapte les paramètres des segments de voie de circulation perturbée (2) du paramètre des voie de circulation sélectionnée, alternative (2).

2. Procédé selon la revendication 1,
**caractérisé en ce que**
les paramètres adaptés sont des valeurs économiques pour augmenter ou abaisser une fonction de coût du trajet déterminé sur la base d'autres paramètres de coût des segments de voie de circulation (2).

3. Procédé selon l'une quelconque des revendications précédentes,
**caractérisé par**
l'association des paramètres adaptés à une caractéristique de perturbation, chaque fois à au moins une perturbation.

4. Procédé selon l'une quelconque des revendications précédentes,
**caractérisé en ce qu'**
avec les paramètres adaptés, on caractérise les segments de voie de circulation (2) perturbée comme étant des routes barrées si bien que ces routes ne peuvent être prises en compte dans le calcul d'un trajet.

5. Procédé selon l'une quelconque des revendications précédentes,
**caractérisé par**
des caractéristiques de segments de voie de circulation (2) avec des paramètres adaptés, comme étant des voies de circulation qu'il n'est possible d'emprunter que de façon très restreinte et qu'il convient si possible de contourner, ces segments n'étant intégrés dans un trajet calculé que s'il n'y a pas de segments alternatifs.

6. Procédé selon l'une quelconque des revendications précédentes,
**caractérisé par**
des caractéristiques de segments de voie de circulation (2) avec des paramètres adaptés comme segments de voie de circulation (2) à éviter si ces segments de voie de circulation (2) dans le cas non perturbée se trouvent sur un trajet entre le point de départ et le point de destination avec une voie de circulation barrée et/ou une voie de circulation que l'on ne peut emprunter que de manière très restrictive.

7. Procédé selon l'une quelconque des revendications précédentes,
**caractérisé par**
des caractéristiques de segments de voie de circulation (2) avec des paramètres adaptés comme constituant des voies recommandées dans des trajets alternatifs pour que ceux-ci soient choisis de préférence pour un trajet passant par un trajet alternatif.

8. Procédé selon l'une quelconque des revendications précédentes,
**caractérisé par**
des caractéristiques de segments de voie de circulation (2) avec des paramètres adaptés comme segments alternatifs à au moins un segment perturbé de voie de circulation (2), les segments alternatifs étant choisis de préférence pour le calcul de trajet si le trajet à l'état non perturbé conduisait par un segment de voie de circulation (2) **caractérisée** comme perturbée.

9. Installation de navigation notamment pour véhicule automobile comportant une unité de calcul pour déterminer un trajet selon le procédé de l'une quelconque des revendications précédentes, l'installation de navigation étant couplée à une installation de réception pour recevoir des paramètres appropriés pour des segments de voie de circulation (2) ou une centrale de signalisation de position multiple.
